# EUROPÄISCHE PATENTSCHRIFT

(11) **EP 1 675 738 B1**
(45) Veröffentlichungstag und Bekanntmachung des Hinweises auf die Patenterteilung: **17.06.2009**
(21) Anmeldenummer: 04765074.2
(22) Anmeldetag: 10.09.2004
(51) Int. Cl.: B60H 1/00, F28F 9/00, F28F 27/02

(54) **MEHRZONIGE KRAFTFAHRZEUG-KLIMAANLAGE**
MULTIZONE AIR CONDITIONING SYSTEM OF A MOTOR VEHICLE
SYSTEME DE CLIMATISATION A ZONES MULTIPLES POUR VEHICULE A MOTEUR

(30) Priorität: 15.10.2003 DE 10348649
(43) Veröffentlichungstag der Anmeldung: 05.07.2006
(73) Patentinhaber: Behr GmbH & Co. KG, 70469 Stuttgart (DE)
(72) Erfinder: KOMAREK, Eugen, 68126 Heidelberg (DE); SCHALL, Matthias, 73760 Ostfildern-Ruit (DE); SCHULTEN, Otto, 75428 Illingen (DE)
(86) Internationale Anmeldenummer: PCT/EP2004/010149
(87) Internationale Veröffentlichungsnummer: WO 2005/042284

(56) Entgegenhaltungen:
- EP-A- 0 768 197
- DE-A- 19 739 578
- DE-A- 19 804 389
- DE-A- 19 823 061
- DE-C- 10 250 287
- DE-U- 8 403 955
- US-A- 4 559 994
- US-A1- 2001 050 163

## Beschreibung

Die Erfindung betrifft eine mehrzonige Kraftfahrzeug-Klimaanlage, gemäß dem Oberbegriff des Anspruchs 1. Eine gattungsgemäße Klimaanlage ist in der DE-A-19823061 offenbart.

Bei herkömmlichen mehrzonigen Kraftfahrzeug-Klimaanlagen ist üblicherweise in Luftströmungsrichtung gesehen zuerst der Heizkörper, anschließend gegebenenfalls ein Zuheizer, dann ein Regelorgan zur Regelung der Temperatur und anschließend der Mischraum angeordnet, so dass eine relativ einfache und exakte Temperaturregelung möglich ist. Eine derartige Anordnung hat jedoch den Nachteil, dass im Falle der Anforderung von kühler Luft, der warme Heizkörper direkt im Luftstrom des Kaltweges angeordnet sein kann. In diesem Fall kommt es zu einer unerwünschten Erwärmung der Luft (Resterwärmung), welche verbunden ist mit einer unzureichenden Abkühlleistung der Klimaanlage oder einem unbefriedigenden Regelverhalten der Klimaanlage, insbesondere im unteren, kühleren Regebereich.

Im Falle einer Anordnung in Luftströmungsrichtung gesehen Regelorgan, Heizkörper, gegebenenfalls Zuheizer und nachfolgend Mischraum treten Probleme bei der Zonentrennung auf, so dass das Regelverhalten ebenfalls Wünsche offen lässt.

Es ist Aufgabe der Erfindung, eine verbesserte mehrzonige Klimaanlage zur Verfügung zu stellern, insbesondere in Hinblick auf die Zonentrennung und optimierte Temperierung der einzelnen Zonen.

Diese Aufgabe wird gelöst durch eine mehrzonige Klimaanlage mit den Merkmalen des Anspruchs 1. Vorteilhafte Ausgestaltungen sind Gegenstand der Unteransprüche.

Erfindungsgemäß ist eine mehrzonige Kraftfahrzeug-Klimaanlage, vorgesehen, mit in Luftströmungsrichtung gesehen einem Regelorgan zur Regelung der Temperatur, einem Verdampfer und einem Heizkörpers, die in einem Luftführungs-Gehäuse angeordnet sind, wobei das Luftführungs-Gehäuse Trennwände aufweist und mindestens ein Trennelement zur dichten Abtrennung der einzelnen Zonen der Klimaanlage am Heizkörper und/oder an einem Zuheizer vorgesehen sind, die mit den Trennwänden und/oder Trennelementen benachbarter Komponenten zusammenwirken, so dass in jeder Zone eine optimale Temperierung möglich ist, ohne Beeinflussungen durch benachbarte Zonen.

Das Trennelement ist am Heizkörper und/oder Zuheizer befestigt wobei es insbesondere angeclipst (insbesondere am Heizkörper), direkt angespritzt (insbesondere an einem Zuheizer) oder anderweitig daran befestigt sein kann. Ein Anclipsen ermöglicht eine einfache Montage, ein Anspritzen kann direkt im Rahmen des Herstellungsprozesses, insbesondere eines PTC-Zuheizers, erfolgen. Dabei ist das Trennelement insbesondere ein Kunststoff-Spritzgussteil.

Alternativ kann insbesondere der Heizkörper derart ausgebildet sein, dass er in Einbaurichtung keine Hinterschneidungen aufweist und mit seinem Netz direkt an den Trennwänden des Luftführungs-Gehäuses anliegt. Dabei ist das Netz des Heizkörpers in Richtung der Luftströmungsrichtung so breit wie die benachbarten Sammeltanks des Heizkörpers und direkt an einer Trennwand dicht anliegend ausgebildet. Unter Trennwand kann in diesem Fall auch ein an einer benachbarten Komponente, beispielsweise dem Heizkörper, vorgesehenes Trennelement sein. Auf beide Weisen kann eine Querströmung der Luft sicher verhindert werden, so dass jede Zone optimal temperiert werden kann. Natürlich sind auch Kombinationen beider Ausführungsformen möglich.

Bevorzugt ist das Regelorgan in Luftströmungsrichtung gesehen vor dem Heizkörper angeordnet, wobei insbesondere je Zone der mehrzonigen Klimaanlage ein Regelorgan vorgesehen ist.

Nach dem Regelorgan, dem Heizkörper vor- oder nachgeordnet, kann ein beliebiger Zuheizer, insbesondere jedoch ein PTC-Zuheizer, vorgesehen sein.

Das Trennelement ist bevorzugt so ausgebildet, dass es einen zwischen dem Netz des Heizkörpers und den Sammeltanks des Heizkörpers vorhandenen Hinterschnitt überbrückt, so dass keine Querströmung der Luft zwischen den einzelnen Zonen-Luftkanälen möglich ist.

Bevorzugt ist das Trennelement kreuzförmig ausgebildet, wobei es einen bevorzugt etwa rechteckförmig ausgebildeten Rahmen aufweist, welcher die Stabilität des Trennelements erhöht und zudem die seitliche Abdichtung verbessert. Je nach Aufbau der Anlage sind jedoch auch nur horizontale oder vertikale Trennelemente möglich, sowohl mit als auch ohne Rahmen. Ebenfalls kann das Trennelement auch nur in horizontaler Richtung, in vertikaler Richtung oder schräg verlaufen.

Ist eine Klimaanlage in Art eines Baukastensystems ausgebildet, wobei ein Zuheizer bei einer Variante entfallen kann, so können zusätzliche Trennelemente eingesetzt werden, welche die Trennwände über die Breite des Bauraums des Zuheizers verlängern, so dass die anderen Bauteile nicht angepasst werden müssen. Dadurch lassen sich die Stückzahlen erhöhen und somit die Herstellungskosten verringern.

Im Folgenden wird die Erfindung anhand zweier Ausführungsbeispiele mit einer Variante teilweise unter Bezugnahme auf die Zeichnung im Einzelnen erläutert. In der Zeichnung zeigen:
- Fig.1: eine Draufsicht auf eine Klimaanlage gemäß dem Ausführungsbeispiel,

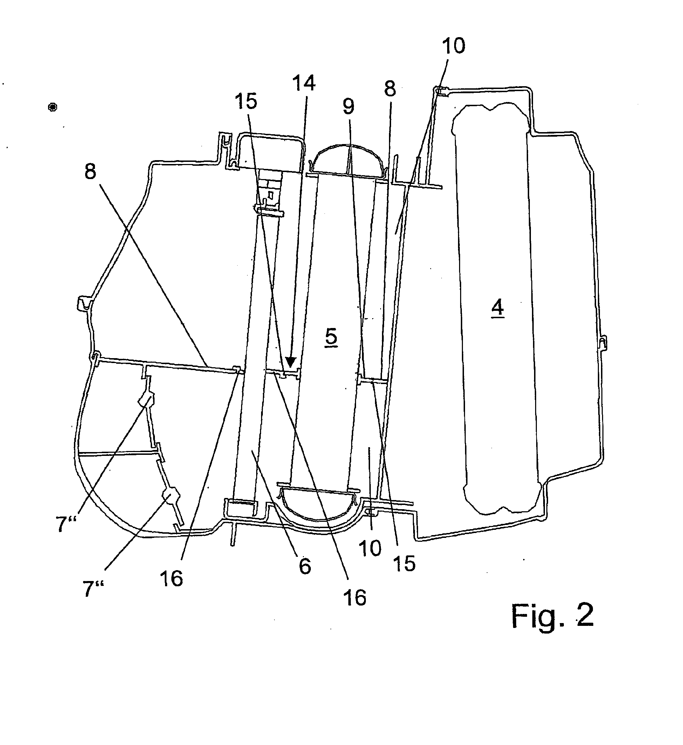

- Fig. 2: eine Seitenansicht der Klimaanlage von Fig. 1,
- Fig. 3: eine Ansicht des Heizkörpers von Fig. 1,
- Fig. 4: eine Ansicht des PTC-Zuheizers von Fig. 1, und
- Fig. 5: eine weitere Ansicht des PTC-Zuheizers von Fig. 1.

Eine mehrzonige Kraftfahrzeug-Klimaanlage 1 weist in einem Luftführungs-Gehäuse 2 ein Gebläse (nicht dargestellt), einen Verdampfer 4 und einen Heizkörper 5 mit einem in Luftströmungsrichtung gesehen nachgeordneten PTC-Zuheizer 6 zur Lufttemperierung, sowie eine Mehrzahl von Regelorganen 7, wie beispielsweise Mischklappen 7', auf, welche der Regelung der Luftführung durch den Verdampfer 4 und Heizkörper 5 (Temperierung der einzelnen Zonen) sowie der Luftverteilung auf Luftkanäle (Klappen 7") zu den einzelnen Bereichen der einzelnen Zonen dienen.

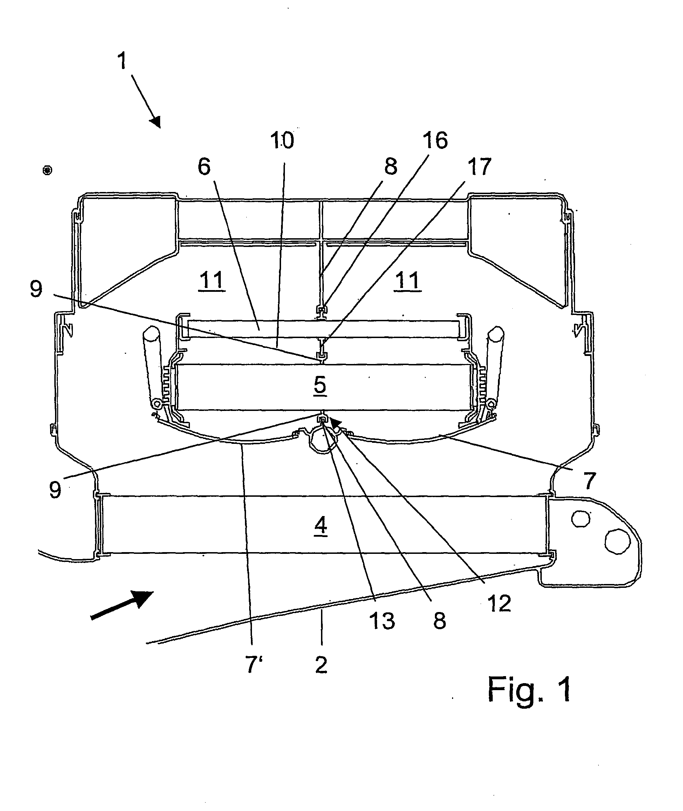

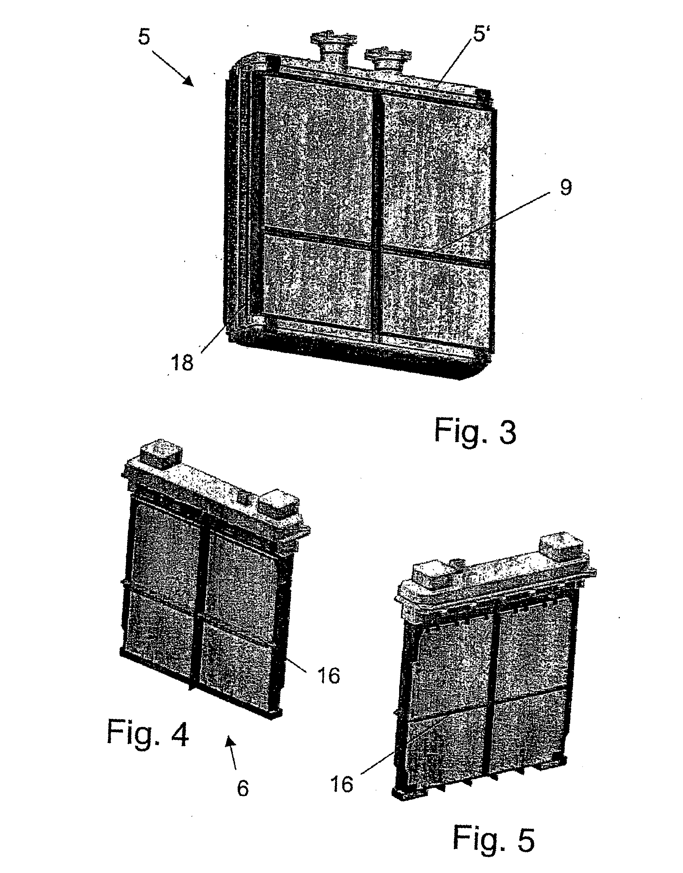

Durch die einzelnen Mischklappen 7' erfolgt eine Aufteilung in mehrere Zonen, so dass im Anschluss an jede Mischklappe 7' von Trennwänden 8 und Trennelementen 9 getrennte Luftkanäle 10 und Mischkammem 11 vorliegen. Die Trennelemente 9 sind auf den Heizkörper 5 beidseitig mittels je vier Clipsverbindungen aufgeclipst (siehe Fig. 3), so dass der Heizkörper 5 mit den Trennelementen 9 in Einbaurichtung in das Luftführungs-Gehäuse 2 keine Hinterschneidungen aufweist, d.h. dass die in Strömungsrichtung der Luft gesehen die vom Heizkörper 5 beabstandete Kante der Trennelemente 9 in gleicher Ebene wie der auf dieser Seite liegende Rand der Sammeltanks 5' des Heizkörpers 5 enden, und ein passgenauer Einbau des Heizkörper 5 in das Luftführungs-Gehäuse 2 mit einer abdichtenden Anlage der Trennelemente 9 an die Trennwände 8 möglich ist. Gemäß dem vorliegenden Ausführungsbeispiel weisen die Trennelemente 9 in ihrem in Einbaurichtung verlaufenden Bereich 12 eine durchgehende Nut 13 auf (siehe Fig. 1). Im quer hierzu verlaufenden Bereich 14 ist eine Anlage 15 vorgesehen. -Gemäß dem vorliegenden Ausführungsbeispiel liegt das auf der PTC-Zuheizer-Seite angeordnete Trennelement 9 direkt an einem am PTC-Zuheizer 6 vorgesehenen, direkt an demselben angespritzten Trennelement 16 an mit entsprechender Funktion.

Das Trennelement 16 weist in Einbaurichtung durchgehende Stege 17 auf, welche in an der entsprechenden Trennwand 8 des Luftführungs-Gehäuses 2 ausgebildeten Nuten beziehungsweise beim auf der anderen Seite des PTC-Zuheizers 6 vorgesehenen Trennelement 16 in die am Heizkörper 5 vorgesehenen Trennelement 9 vorgesehene Nut 13 eingreifen. Die Ausbildung der Anlagen, Trennelemente und Trennwände ist abhängig von der Reihenfolge des Einbaus, wobei die Anlagen, Trennelemente und Trennwände derart ausgebildet sind, dass eine sichere Abdichtung möglich ist.

Neben der Abdichtung im mittleren, vorliegend kreuzförmigen bereich dienen die Trennelemente 9 und 16 auch der Abdichtung in den Randbereichen des Heizkörpers 5 sowie der PTC-Zuheizers 6, weshalb sie entsprechend ausgebildet sind. So weist das Trennelement 9 bei der vorliegenden vierzonigen Klimaanlage 1 einen rechteckförmigen Rahmen 18 auf, welcher auch zur Erhöhung der Stabilität des Trennelements 9 dient.

Gemäß einer nicht in der Zeichnung dargestellten Variante entfällt der PTC-Zuheizer 6, so dass die Trennelemente, die am Heizkörper angeclipst sind, mit entsprechend ausgebildeten Trennwänden zusammenwirken und die Abdichtung zwischen den einzelnen Zonen der Klimaanlage gewährleistet ist. Dabei können die Trennwände auch durch ein zusätzliches Trennwandmodul ersetzt werden, welches an Stelle des PTC-Zuheizers eingebaut ist.

Entsprechend einem zweiten Ausführungsbeispiel mit einem nach Mischklappen angeordneten Heizkörper ist der Heizkörper derart ausgebildet, dass das zwischen den beiden Sammeltanks angeordnete Netz in Luftströmungsrichtung gesehen so breit ausgebildet ist wie die Sammeltanks, so dass keine Hinterschneidung vorgesehen ist und ein passgenauer Einbau des Heizkörpers in das Luftführungs-Gehäuse mit einer abdichtenden Anlage an die Trennwände möglich ist. Die Trennwände sind hierbei mit speziellen Dichtelementen versehen, die am Netz anliegen, so dass keine Quer strömung der Luft möglich ist.

### Bezugszeichenliste

- 1: Kraftfahrzeug-Klimaanlage
- 2: Luftführungs-Gehäuse
- 4: Verdampfer
- 5: Heizkörper
- 6: PTC-Zuheizer
- 7: Regelorgan
- 7': Mischklappe, Regelorgan
- 7": Klappe
- 8: Trennwand
- 9: Trennelement (Heizkörper)
- 10: Luftkanal
- 11: Mischkammer
- 12: Bereich
- 13: Nut
- 14: Bereich
- 15: Anlage
- 16: Trennelement (PTC-Zuheizer)
- 17: Steg
- 18: Rahmen

## Patentansprüche

1. Mehrzonige Kraftfahrzeug-Klimaanlage, mit in Luftströmungsrichtung gesehen einem Regelorgan (7') zur Regelung der Temperatur, einem Verdampfer (4) und einem Heizkörper (5), die in einem Luftführungs-Gehäuse (2) angeordnet sind, wobei das Luftführungs-Gehäuse (2) Trennwände (8) aufweist, **dadurch gekennzeichnet, dass** mindestens ein Trennelement (9;16) zur dichten Abtrennung der einzelnen Zonen der Klimaanlage (1) am Heizkörper (5) und/oder an einem Zuheizer (6) befestigt ist, das mit den Trennwänden (8) und/oder Trennelementen (6; 19) benachbarter Komponenten zusammenwirkt.

2. Klimaanlage nach Anspruch 1, **dadurch gekennzeichnet, dass** das Regelorgan (7') vor dem Heizkörper (5) angeordnet ist.

3. Klimaanlage nach Anspruch 1 oder 2, **dadurch gekennzeichnet, dass** je Zone ein Regelorgan (7') vorgesehen ist.

4. Klimaanlage nach einem der vorhergehenden Ansprüche, **dadurch gekennzeichnet, dass** dem Heizkörper (5) vor- oder nachgeordnet ein Zuheizer (6) vorgesehen ist.

5. Klimaanlage nach Anspruch 1, **dadurch gekennzeichnet, dass** das Trennelement (9; 16) am Heizkörper (5) und/oder am Zuheizer (6) angespritzt oder angeclipst ist.

6. Klimaanlage nach Anspruch 1 oder 5,**dadurch gekennzeichnet, dass** das Trennelement (9) einen zwischen dem Netz des Heizkörpers (5) und den Sammeltanks des Heizkörpers (5) vorhandenen Hinterschnitt überbrückt.

7. Klimaanlage nach einem der vorhergehenden Ansprüche, **dadurch gekennzeichnet, dass** das Trennelement (9; 16) kreuzförmig ausgebildet ist.

8. Klimaanlage nach einem der vorhergehenden Ansprüche, **dadurch gekennzeichnet, dass** das Trennelement (9; 16) einen Rahmen aufweist.

## Claims

1. A multizone air conditioning system of a motor vehicle, having, as viewed in the direction of airflow, a control element (7') for controlling the temperature, a vaporizer (4) and a heater (5) which are arranged in an air guiding housing (2), the air guiding housing (2) having dividing walls (8), **characterized in that** at least one dividing element (9; 16) for the sealed division of the individual zones of the air conditioning system (1) is fixed on the heater (5) and/or on a supplementary heater (6), which dividing element (9; 16) interacts with components which are adjacent to the dividing walls (8) and/or dividing elements (6; 19).

2. The air conditioning system as claimed in claim 1, **characterized in that** the control element (7') is arranged in front of the heater (5).

3. The air conditioning system as claimed in claim 1 or 2, **characterized in that** one control element (7') is provided per zone.

4. The air conditioning system as claimed in one of the preceding claims, **characterized in that** a supplementary heater (6) is provided arranged ahead of or behind the heater (5).

5. The air conditioning system as claimed in claim 1, **characterized in that** the dividing element (9; 16) is injection molded or clipped onto the heater (5) and/or onto the supplementary heater (6).

6. The air conditioning system as claimed in claim 1 or 5, **characterized in that** the dividing element (9) bridges an undercut which is present between the network of the heater (5) and the collecting tanks of the heater (5).

7. The air conditioning system as claimed in one of the preceding claims, **characterized in that** the dividing element (9; 16) is of cross-shaped configuration.

8. The air conditioning system as claimed in one of the preceding claims, **characterized in that** the dividing element (9; 16) has a frame.

## Revendications

1. Système de climatisation d'un véhicule automobile, à zones multiples, comprenant, vu dans la direction d'écoulement de l'air, un organe de régulation (7') servant à la régulation de la température, un évaporateur (4) et un radiateur (5) qui sont disposés dans un carter de guidage d'air (2), où le carter de guidage d'air (2) présente des parois de séparation (8), **caractérisé en ce qu'**au moins un élément de séparation (9 ; 16) servant à la séparation étanche des différentes zones du système de climatisation (1) est fixé sur le radiateur (5) et / ou sur un dispositif de chauffage auxiliaire (6), lequel élément de séparation agit de façon conjuguée avec les parois de séparation (8) et / ou avec des éléments de séparation (6 ; 19) de composants voisins.

2. Système de climatisation selon la revendication 1, **caractérisé en ce que** l'organe de régulation (7') est disposé devant le radiateur (5).

3. Système de climatisation selon la revendication 1 ou 2, **caractérisé en ce qu'**il est prévu un organe de régulation (7') par zone.

4. Système de climatisation selon l'une quelconque des revendications précédentes, **caractérisé en ce qu'**il est prévu un dispositif de chauffage auxiliaire (6) disposé en amont ou en aval du radiateur (5).

5. Système de climatisation selon la revendication 1, **caractérisé en ce que** l'élément de séparation (9 ; 16) est moulé par injection ou clipsé sur le radiateur (5) et / au sur le dispositif de chauffage auxiliaire (6).

6. Système de climatisation selon la revendication 1 ou 5, **caractérisé en ce que** l'élément de séparation (9) comble une contre-dépouille présente entre le réseau du radiateur (5) et les bacs collecteurs du radiateur (5).

7. Système de climatisation selon l'une quelconque des revendications précédentes, **caractérisé en ce que** l'élément de séparation (9 ; 16) est configuré de façon cruciforme.

8. Système de climatisation selon l'une quelconque des revendications précédentes, **caractérisé en ce que** l'élément de séparation (9 ; 16) présente un cadre.
